Europäisches Patentamt

European Patent Office

Office européen des brevets

(19)

(11) Publication number: **0 152 684**
**B1**

(12) **EUROPEAN PATENT SPECIFICATION**

(45) Date of publication of patent specification: **09.11.88**

(51) Int. Cl.⁴: **G 11 B 5/716**

(21) Application number: **84308248.8**

(22) Date of filing: **28.11.84**

(54) Protection of thin cobaltous films for magnetic recording.

(30) Priority: **27.12.83 US 565270**

(43) Date of publication of application:
**28.08.85 Bulletin 85/35**

(45) Publication of the grant of the patent:
**09.11.88 Bulletin 88/45**

(84) Designated Contracting States:
**BE DE FR GB NL SE**

(56) References cited:
**DE-A-2 460 595**
**DE-A-3 004 771**
**DE-A-3 113 558**
**DE-A-3 121 910**
**.GB-A-2 015 376**

(73) Proprietor: **MEMOREX CORPORATION**
**San Tomas at Central Expressway**
**Santa Clara California 95052 (US)**

(72) Inventor: **Dubin, Robert R.**
**2334 Hastings Drive Belmont**
**California 94002 (US)**

(74) Representative: **Kirby, Harold Douglas Benson**
**et al**
**G.F. Redfern & Company Marlborough Lodge 14**
**Farncombe Road**
**Worthing West Sussex BN11 2BT (GB)**

Courier Press, Leamington Spa, England.

## Description

This invention relates to thin cobalt-containing films for (vertical or longitudinal) magnetic recording and, more particularly, to novel methods of protecting these against corrosion, wear and the like.

Background, features:

As workers in the art know, interest is increasing in providing and using thin continuous metal films for "vertical" (cf. "perpendicular") or "horizontal (i.e., "longitudinal") magnetic recording media—as opposed to the more conventional "oxide" coatings, including magnetic iron particles suspended in a matrix and coated on a tape or disk drive systems and like systems with improved performance.

This invention is directed to such thin metal films of the "cobaltous" (i.e., of cobalt or cobalt-alloy) type and is particularly concerned with means for protecting such from corrosion and wear.

Now various workers have proposed cobalt-based alloys for use in longitudinal or vertical recording applications; indeed, binary and ternary alloy compositions containing alloy components of Co, Ni, W, Cr, Re and P have all been reported (e.g., see references cited below). The subject treatment is directed to thin cobaltous recording films, especially Co/Cr and Co/Ni alloys.

Some study has been devoted to how cobaltous (especially Co/Cr) thin films may be adapted for magnetic recording—especially for perpendicular magnetic recording applications. (See "Proceedings of the 1982 Sendai Symposium on Perpendicular Magnetic Recording", Tohoku University, March 11—12, 1982, Sendai, Japan); also see articles by R. D. Fisher, L. Herte, and A. Lang, IEEE Transactions on Magnetics, Vol. MAG-17, No. 6, November 1981; or by F. E. Luborsky, IEEE Transactions on Magnetics, Vol. MAG-6, No. 3, September 1970; or by S. Iwasaki, K. Duchi, IEEE Transactions on Magnetics, Vol. MAG. 14, No. 5, September 1979; or by D. W. Rice, P. B. Phipps, and R. Tremoureux, J. of ECS, Vol. 126, No. 9, September 1979; or by N. Schwartz and D. D. Bacon, J. of ECS, Vol. 125, No. 9, September 1978). Some have given consideration to the (sputter) deposition of binary and ternary cobalt alloy thin films on rigid or flexible substrate materials. The subject teachings are directed to adapting cobaltous record films to better provide against wear and corrosion.

Some studies have dealt with (atmospheric) corrosion of thin films in general, particularly of thin cobalt alloy films (cf. articles by R. R. Dubin, K. D. Winn, L. P. Davis and R. A. Cutler, J. Appl. Phys. 53(3), March 1982; or,

by D. W. Rice, P. B. Phipps and R. Tremoureux, J. of ECS, Vol. 126, No. 9, September 1979; or,

by N. Schwartz and D. D. Bacon, J. of ECS, Vol. 125, No. 9, September 1978); however, there is limited specific information dealing with Co/Cr vertical recording alloys.

DE—A—3 004 771 discloses a magnetic recording medium comprising a first magnetic layer containing Magnetite or a Cobalt doped Magnetite which is coated on a non-magnetic substrate, and a second magnetic layer containing a Cobalt doped $Fe_2O_3$ which is coated on said first magnetic layer.

GB—A—2 015 376 discloses a magnetic recording material consisting of a support and at least two layers containing magnetic pigments and binders and differing in coercivity and layer thickness. The upper layer contains thermally stabilised Magnetite containing from 0.1 to 5% by weight of Cd, Pb, Ca, Mg, Zn, Al, Cr, W, P and/or B based on $Fe_3O_4$. The lower layer contains an acicular iron oxide.

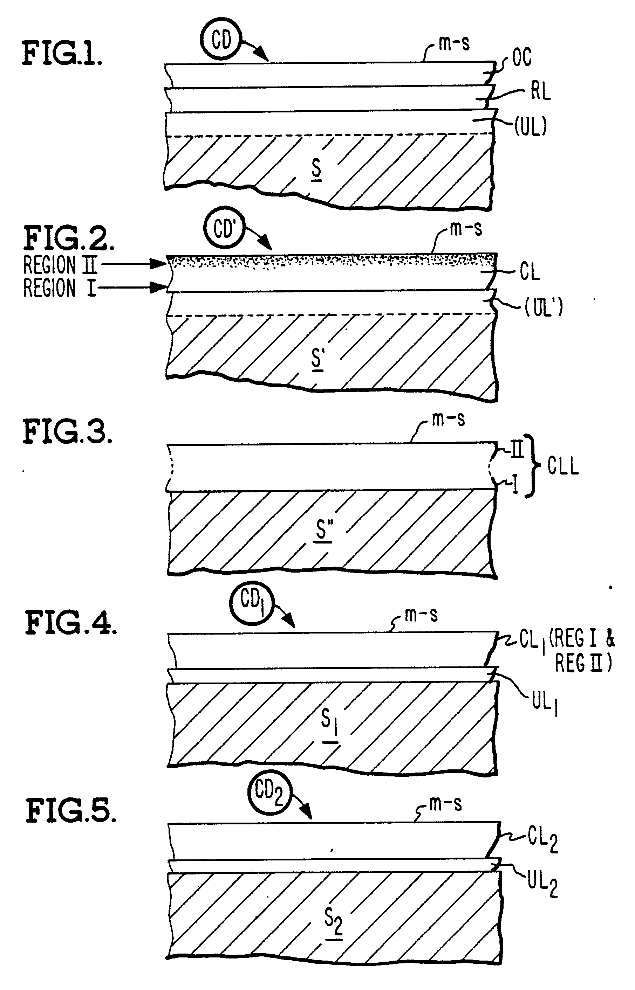

Conventional structure: (Fig. 1)

Figure 1 shows a cross-sectional idealized view of a portion of a thin film disk CD understood as adapted for magnetic recording. A rigid or flexible substrate S will be understood as a base upon which a thin metallic underlayer (UL, in phantom) may be deposited. A magnetic recording layer RL having suitable properties for (vertical or longitudinal) magnetic recording is deposited on the underlayer. The layered structure CD is typically completed by depositing a separate corrosion-resistant overlayer OC with an exposed surface m-s, as shown in this diagram. This final layer OC is intended to protect the magnetic recording layer RL from degradation by atmospheric corrosion and/or physical wear (e.g., vs a R/W head abrading exposed surface m-s).

Conventional coatings OC to protect the magnetic layer RL from such degradation usually present at least three distinct disadvantages:

1. "Signal degradation": the thickness of the corrosion-resistant layer OC must be so great that it seriously impairs the strength of the magnetic R/W signals transferring information between the recording disk and an associated recording head.

2. "Incompatibility": the chemical composition and important physical properties of the corrosion-resistant overlayer OC are different from those of the recording layer RL. This can lead to incompatibilities in physical properties between layers (e.g., thermal expansion discrepancies—can lead to cracking, etc. as workers well know).

3. "Non-magnetic": the magnetic properties of the overlayer do not "match" those of the magnetic layer; typically, the overcoat is quite non-magnetic.

This disclosure describes improved thin cobaltous recording films wherein novel overcoat means are used to overcome these, and other, disadvantages and to exhibit improved surface resistance to wear and atmospheric corrosion.

—Conventional protective overcoats OC:

Workers will recognize that such an overcoating OC is typically problematical to apply, and is hard to maintain, especially as-corrosion and wear stresses develop. Materials problems often result. For instance, where fabrication may involve applying a protective film like aluminum, then heating it so the Al will diffuse-inward into the recording layer RL. It will be apparent that a part of this recording layer RL is thereby impaired and sacrificed in such a case (recording properties degraded).

More seriously, however, the intense heating necessary to secure adequate diffusion (particularly of a coating material like aluminum) is often impractical—e.g., for many of the most desirable (plastic—e.g., Kapton or the like) substrates, especially for floppy disks which are of particular interest for perpendicular recording.

Another materials problem is that the (typically desirable) overcoating materials are often quite dissimilar from those of the recording RL and can readily induce, or exacerbate, corrosion problems. For instance, with vertical recording, the overcoat might consist of carbon (e.g., graphite form) or a silicate (e.g., $SiO_2$), or an organic, such as a fluorocarbon elastomer—all particularly problematical with the usual in-contact vertical recording head, especially when placed on a floppy disk, as is usually desired.

Moreover, the overly-large thickness necessary for adequate corrosion and wear protection is counterproductive in terms of optimum magnetic read/write operations which dictate that the head (pole) be as close to the recording layer RL as possible.

And thin overcoats, even where practical, are very, very difficult and expensive to provide in adequate form; for instance, they often present voids (non-continuous coverage), or other defects which typically provide an excellent nucleation site for incipient corrosion. Moreover, whether dealing with perpendicular or longitudinal recording, workers recognize that the typical overcoat material is "non-magnetic", i.e., it has little or no magnetic moment; indeed, magnetically it is much more like an "air gap" than the recording layer RL—thus it will necessarily degrade recording and transcription characteristics.

Now, workers will acknowledge that present-day "cobaltous" magnetic recording surfaces can be seriously degraded unless overcoated—i.e., to protect against head-wear and/or against surface-corrosion—either of which can badly compromise record properties.

For instance, the common Co-Ni (longitudinal) recording surface will be disastrously affected by such common ambient corrosives as chlorine, sulfur (or their compounds) unless overcoated extensively—especially when moisture is also present (e.g., basic recording characteristics can be radically changed). The danger is similar for uncoated Co-Cr (vertical) recording thicknesses, especially where oxygen is abundant (even though the Cr moiety is normally thought "anti-corrosive"). For reference, see: "Behavior of Perpendicular Recording Materials in Cl and S Containing Atmospheres" by R. R. Dubin and K. D. Winn, IEEE Transaction on Magnetics, September 1983; and "Degradation of Co-based Thin-Film Recording Materials in Selected Corrosive Environments" by R. R. Dubin, K. D. Winn, L. P. Davis, R. A. Cutler, J. Appl. Phys., Vol. 53, Part II, 2579 (1982).

The present teachings are designed to remedy such shortcomings, providing a protective overcoat exhibiting "semi-magnetic" characteristics, and other properties more akin to those of the recording layer.

—Aspects of invention: (Fig. 2)

The subject teaching involves, in a principal aspect, composite recording-protection structures which are especially apt for protecting cobaltous thin films against wear and corrosion—as adapted for (perpendicular and longitudinal) magnetic recording. The invention teaches a composite structure CD' as suggested rather idealistically and conceptually in Fig. 2, comprising a substrate S' and a composite recording protective magnetic layer CL specifically formulated and applied to both provide a recording thickness and to provide a protective super-thickness apt for resisting atmospheric corrosion and wear. And as adapted for certain recording, an underlayer, as in Fig. 1, may be desirable, such as indicated in phantom at UL'. Thus, the substrate and underlayers may be identical to those described for the conventional structure of Fig. 1.

This magnetic "self-protective" structure CL may best be conceptualized as consisting of two regions: a lower recording thickness: Region I, characterized by a single invariant (magnetic-recording) chemical composition; and a second over-thickness: Region II, which is formulated to resist wear and corrosion, is made somewhat "magnetic" and is, in properties, akin to Region I. And, importantly, Region II presents a "composition gradient" whereby one, or several, constituents is continuously varied in concentration as one proceeds from the surface of the layer CL downward toward the "constant-composition" Region I (within CL).

Now, Region II will always be less magnetic than Region I (and less apt for recording), but Region II should always be "somewhat magnetic" and not represent an "air-gap region" (e.g., Region I is typically 80—85 wt.% Co in a Co/Cr alloy, with Region II having less than 80 wt.% Co). In special cases, workers may prefer to make Region II constitute one or several discrete subregions of relatively different proportions (e.g., but with uniform material concentration within each sub-region).

Preferably, the "variable composition" Region II portion of the magnetic structure CL is formed by incorporating corrosion-inhibiting (and wear-resistant) chemical constituents such as Chromium (Cr) and/or Aluminum (Al) into the recording composition (Region I). This constituent (e.g., Cr) may then be varied (%) in Region II to form a corrosion-resistant, wear-resistant upper region which is closely similar in physical, chemical, and magnetic properties to the composition of recording Region I. These similarities can largely overcome the disadvantages above-stated (e.g., where a conventional composite structure will have a separate and quite different protective coating, such as coating OC in Fig. 1, which is quite different from the associated recording region RL). The invention can be better and further understood by the following Examples.

The cobaltous magnetic films of the invention may be sputtered or otherwise deposited onto a flexible or rigid substrate as known in the art. Where the thickness of a conventional recording layer, such as layer RL in Fig. 1, will be on the order of 50 to 1,000 nm some, 2K nm) and its magnetic properties will be optimized for the contemplated (vertical or longitudinal) magnetic recording, the thickness of the subject self-protective composite layer CL, according to the invention, may be the same order of magnitude (e.g., with Region II 10—300 nm); and it will be somewhat magnetic throughout, with the recording-reproducing properties optimized in Region I, of course.

Sputtering will be the usually-preferred deposition (especially for vertical recording). Electro-plating, the easiest to implement, will be less preferred since it is much more likely to introduce impurities and related "control" problems. For Region II, sputtering is most preferable (RF sputter, or co-sputter, or reactive sputter) to vary proportions in a gradual carefully-controlled fashion and without appreciable impurity % (cf. co-sputter with a target that is vacuum-melted, not sintered). Less preferred will be electron-beam evaporation methods. Preferably, one will use the same deposition methods for Region I and Region II. Cobaltous films on the order of .1 to 1 μm typically exhibit high coercivity and high hysteresis-loop-squareness, making them good candidates for use as high density digital storage media.

Since successful application of such films in magnetic recording devices requires suitable resistance to atmospheric corrosion, wear resistance, the upper, more protective (magnetic) region (II) will, of course, be appropriately optimized to exhibit such. The recording region (I) portions comprises cobalt, alone or as alloyed with nickel (and also tungsten in some cases) or with chromium, (i.e., Co, Co/Ni, Co/Ni/W, Co/Cr) or other like cobaltous alloys as known in the art.

In some cases, Region II should comprise (most of) the constituents of Region I, with one or several of these constituents varied in concentration as one proceeds up, through Region II, from the constant-composition Region I to the surface m-s of overall composite structure CL.

Metallurgical concentration will be so varied gradually to better match the properties (chemical and physical, including magnetic) of the recording region I—for instance, to minimize any thermal expansion or other stresses likely to cause cracking or other like difficulties as known in the art.

One novel aspect of this Region II is that its magnetic properties, as well as certain other properties, will be much more closely matched to those of the recording Region I—for instance, being somewhat magnetic (e.g., having some appreciable magnetic moment under a read/write flux).

Workers will recognize that a very useful ancillary advantage to such a varying of the recording composition is that fabrication can be simplified greatly. For instance, if the recording layer (Region I) is formed by co-sputtering elements A, B, C, it is feasible, once Region I is built-up and completed, to continue the same deposition mode, varied appropriately, to form Region II (A, B plus varying C). For instance, a gradual modification of sputtering parameters can be used, such as increasing the concentration of constituent C as the layer builds up, (also a single deposition vessel can be used, as may also be applicable for plating or for vacuum-deposition as known in the art)—in sputtering, one may vary the voltage and deposition rate applicable to the varying % target material(s), for instance, to throw more and more of it onto the substrate, as workers know. (—This should be compared with the intense heat needed to diffuse in a coating material as mentioned above, with associated thermal damage that this involves, to the substrate, etc.).

In theory, there is no particular limit to the additive (protective) materials that may be added to the recording layer Region I, or built-up thereon separately to constitute Region II. However, workers will recognize that certain materials are too reactive (e.g., sodium) and will not be favored; whereas, for the examples here presented, "transition metals", or like material which can be sputtered at close to ambient temperature (including non-metals), are most favored.

—"Self-Protective" recording layer concept: (Fig. 3)

Conceptually, it may be helpful to think of this novel magnetic self-protective recording region as a single, relatively unitary thickness CLL, as in Fig. 3, exhibiting optimized protective properties adjacent its exposed surface m-s (i.e., in Region II) and optimized recording properties near its base (i.e., in Region I, atop substrate S")—with a gradient blend of chemical and physical properties extending between these two regions, I and II (as indicated by the dashed lines). Of course, this "gradient" is established and defined by gradually changing the concentration of one or more "control-constituents"like Cr (chromium), as detailed below. Importantly, this protective overlayer (Region II) is quite "magnetic" and has other properties more like the recording region (I) than is usual (—in addition to affording the usual surface protection vs wear and corrosion).

Table I summarizes salient composition-combinations for Region I and Region II.

# 0 152 684

TABLE I

| | Region I (opt.) | Region II | Mag.[1] | Var.% (ult.)** | As in ? |
|---|---|---|---|---|---|
| 1. | Co-Cr* (85/15) | Co-Cr | Co | Cr (100%) | Ex. I |
| 2. | Co-Cr (85/15) | Co-Cr-O | Co | O ($CrO_2$, $Cr_2O_3$) | |
| 3. | Co-Cr (85/15) | Co-Cr-Al | Co | Al (100%) | Ex. II, III |
| 4. | Co-Cr (85/15) | Co-Cr-Al-O | Co | O (AlO; $CrO_2$, $CrO_3$) | Ex. IV |
| 5. | Co-Ni (80/20) | Co-Ni-Cr | Co-Ni | Cr | Ex. V |
| 6. | Co-Ni (80/20) | Co-Ni-Cr-O | Co-Ni | O ($CrO_2$, etc.) | |
| 7. | Co-Ni (80/20) | Co-Ni-Al | Co-Ni | Al | Ex. VI |
| 8. | Co-Ni (80/20) | Co-Ni-Al-O | Co-Ni | O (AlO, etc.) | |
| 9. | Co*** | Co-Cr | Co | Cr | |
| 10. | Co | Co oxide | Co | Oxide | |

* Note: Co 80—85 feasible; for vert. rec., prefer 82/18, plus undercoat of Ni-Fe.
** Note: also consider W, Mo ($MoS_2$ or carbon).
*** Note: some workers will not deem "satisfactory".
[1] Enough % for min. acceptable magnetic moment—Effect changing % Al: readily by certain "Aluminiding"—see U.S. Patent No. 4,048,390.

—Brief description of the drawings:

These and other features and advantages of the present invention will be appreciated by workers as they become better understood by reference to the following detailed description of the present preferred embodiments which should be considered in conjunction with the accompanying drawings, wherein like reference symbols denote like elements:

Fig. 1 is a highly idealized, partial cross-sectional depiction of a magnetic recording medium having a conventional protective overcoating;

Fig. 2 is a like depiction of such a medium modified as an embodiment to exhibit a novel self-protective two-part recording-protective layer, such being otherwise depicted (more generally) in Fig. 3;

Fig. 4 is a like depiction of a more specific embodiment (see Ex. I);

Fig. 5 is a like depiction of a different specific embodiment (Ex. III); while,

Figs. 6 and 7 are very simplistic illustrations of vertical and horizontal recording arrangements, respectively.

—Description of the preferred embodiment:

—General description, background:

Fig. 4 schematically illustrates a magnetic recording disk $CD_1$ constructed according to principles of this invention. This, and other magnetic recording means discussed herein, will generally be understood as constructed and operating as presently known in the art, except where otherwise specified. And, except as otherwise specified, all materials, methods and devices and apparatus herein will be understood as implemented by known expedients according to present good practice.

Ex. I: Cr/Co atop Co-Cr: Fig. 4 (vertical recording):

As a preferred embodiment hereof indicated in Fig. 4, a magnetic recording disk $CD_1$ adapted for perpendicular (vertical) recording is proposed, being improved according to the invention generally along the lines discussed above relative to disk CD' in Fig. 2. Generally speaking, disk $CD_1$ comprises a rigid substrate $S_1$ carrying a magnetic underlayer $UL_1$ on which is deposited a composite recording-self-protective layer $CL_1$ with a transducer-confronting surface m-s. Layer $CL_1$ will be understood as comprising a suitable cobalt-chromium lower recording thickness (Region I), covered by a variable-concentration cobalt-chromium protective layer, with the chromium concentration increasing as one proceeds upward from Region I through Region II to terminate at the medium surface m-s.

More particularly, substrate $S_1$ comprises a rigid aluminum alloy disk (e.g., alloy #5086 as known in the art—alternatively a flexible substrate disk such as one of polyester, polyimide, or a like plastic may be provided. The aluminum disk will be understood as having a suitable thickness (e.g., 508 to 2032 μm) and a suitable diameter (e.g., pref. 133.35 mm here). Magnetic underlayer $UL_1$ will conventionally be used, being

5

preferably comprised of a suitable thickness of Permalloy (e.g., 0.1 to 1.0 µm—pref. 1.0—of 81 wt.% Ni/19 Fe sputtered onto the surface of disk $S_1$—alternatively electroplating is feasible here).

Further, workers are known to prefer a magnetic underlayer UL—typically of a high permeability material (for such perpendicular recording); such as, especially, a permalloy (Ni-Fe or Ni-Fe-Mo, for a Co/Cr film—see underlayer UL indicated in phantom in Fig. 1).

Next, the chemically-homogeneous Co/Cr recording layer (Region I) is deposited atop permalloy underlayer $UL_1$ as the initial thickness (Region I) of layer $CL_1$. For this, a suitable magnetic recording Co/Cr alloy is laid down (80—85 wt.% Co/20—15 Cr; prefer 82 Co/18 Cr) i.e., deposited on the Ni-Fe underlayer in a suitable manner to produce significant magneto-crystalline anisotropy ("easy axis" perpendicular to plane of substrate disk $S_1$ as well known in the art). Sputter deposition is preferred for this, although plating is alternatively feasible. The thickness of this Co/Cr Region I will be from about 0.5 to 1.0 µm, and it will exhibit a relative "moderate" magnetic coercivity (Hc about 20 to 60 A/mm measured perpendicular to plane of $S_1$, as known in the art).

Record layer $CD_1$ as above fabricated according to the invention yields a "defect-free" continuous thin film with high magnetic coercivity. It requires inertness to atmospheric corrosion to preserve data, stored as magnetic transitions within the film of Region I, and the physical texture-less surfaces achieved after initial film deposition.

Workers will recognize that corrosion behavior is very important since small changes in film surface characteristics (e.g., roughness, chemistry, morphology) can cause substantial changes in device performance. For instance, the cited Dubin-Winn paper characterizes the corrosion behavior of Co/Cr films (wide variety of alloys, two thicknesses, different substrates, some with Permalloy underlayer) after exposure to chlorine, $SO_2$ and oxygen-containing test atmospheres at various relative humidities.

Next, layer $CL_1$ is completed by overlaying Region II. Preferably, this is done as an extension of the sputter-deposition sequence for Region I since, according to this feature of convenience, one need only steadily increase the Cr concentration after co-sputtering the Co/Cr for Region I. This upper, variable-composition thickness (Region II) is formed, here, merely by continuously increasing chromium enrichment of the "Region I alloy" as the Region II deposit builds-up atop Region I.

This may be done according to known methods, such as the mentioned co-sputtering. It will produce a Region II (10—300 nm thick preferably) which exhibits a gradient in chromium composition such that the overall thickness $CL_1$ is richest in chromium at its outermost, exposed surface m-s. This surface will preferably exhibit an enrichment of about 0—10% Co/100—90% Cr (prefer 100% Cr—thus the % Cr goes from 18% to 100% up through Region II, with decreasing magnetic moment—cf. excess Co may allow corrosion and/or "demagnetization"; excess Cr will degrade magnetic characteristics).

—Results:

Workers will notice that such a medium will exhibit superior magnetic characteristics—e.g., with less head-spacing loss of signal (as though head were positioned closer to surface m-s of medium; e.g., higher read-back signal amplitude, increased write-flux; smaller bit-size possible. Also, the "upper" portion, adjacent surface m-s, will exhibit less relative stress, less "surface-tarnish" and less "pitting" and other surface corrosion or contaminant-penetration (such surface effects are known to seriously degrade record characteristics). Also, little or no (less) flaking or scaling is observed (these always degrade the magnetic moment there). In general, less corrosive assault on the (bulk, grain) metal is observed, with less associated attention of magnetic properties. And, wear-resistance is enhanced.

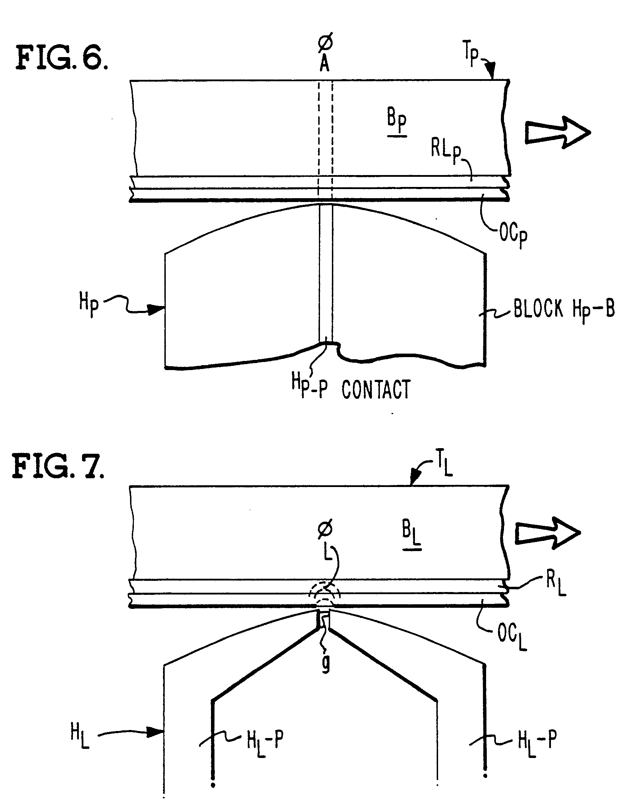

—Recording methods (Figs. 6, 7):

It will be understood that the kind of vertical magnetic recording here contemplated is well known in the art; for instance as (very schematically) indicated in Fig. 6 wherein a passing record segment Tp is acted upon (written, read-back) by a related transducer Hp (including a pair of block sections, separated by a bit-defining gap portico (or pole-face-contact area, Hp-p) adapted to project operative flux $Ø_A$ as known in the art). Typically, record segment Tp will comprise a recording thickness $RL_p$ on a substrate base $B_p$ and with a protective over-coat thickness $OC_p$ in $RL_p$.

By contrast, workers will recognize, in Fig. 7, a very schematic functional illustration of a horizontally-recording magnetic transducer $H_L$ apt for horizontally (or longitudinally) recording on a related passing medium (i.e., on a recording thickness $R_L$ thereof, coated on a substrate $B_L$ and covered by a known protective overcoat thickness $OC_L$). Here, it will be understood that opposed magnetic poles $H_L$-P, $H_L$-P', separated by gap g project a recording magnetic flux $Ø_L$ to so write on layer $R_L$.

—Concept: protective over-layer "akin to" recording layer:

Workers will note that, according to the invention, Ex. I has created the Region II portion of layer $CL_1$ by depositing (increased Cr) constituents exhibiting the desired anti-wear and corrosion-inhibiting qualities, thus forming a wear-resistant, corrosion-resistant region, especially at its exposed surface m-s, while also maintaining physical, chemical, and magnetic properties which are akin to the Region I Co/Cr alloy; in particular, having a relatively significant magnetic moment (being "magnetic" like Region I, as opposed to the relatively non-magnetic protective layers which are typical of the prior art, also being relatively close in thermal expansivity, etc.).

Such similarities will be understood as largely overcoming the disadvantages stated above for conventional overcoatings. Workers will also recognize that, in many instances, one will best determine the "variant-concentration" experimentally—e.g., a worker having particular magnetic recording characteristics in mind, as well as specific wear- and corrosion-experience, will formulate his recording layer and build-up the related protective layer accordingly (for instance, the more disparate the surface m-s is from the recording layer in properties, etc., the greater will likely be the thickness of Region II and the extent of composition-change as Region II is built-up. Conversely, if the wear and corrosion experience is expected to be relatively "gentle", the thickness (and/or shift in % Cr) of Region II might be relatively less, etc.).

In any event, workers will recognize that, unlike prior art overcoats, the thickness of this protective Region II will compromise magnetic read/write operations much less since the region is "magnetic", where prior art protective coatings are non-magnetic. And, where workers in the prior art have consequently "skimped" on this protective thickness to avoid such read/write degradation (running the risk of under-coating areas so they are dangerously-thin or non-existent in spots, and thus encouraging corrosion and deterioration there), there will be less temptation to do this since my so-improved protective layer is "magnetic".

—Advantageous special case:

And beyond the above, this Ex. I illustrates how some special advantages and convenience may be achieved by simply modifying the composition of the underlying recording layer, to create a protective overcoat. Thus, the same deposition equipment and methods can often be used for Regions I and II. For instance, in Ex. I, we co-sputter 82 Co-18 Cr to form Region I, then co-sputter the protective layer by simply (gradually) increasing the concentration of deposited Cr (to terminate at about 80—100 wt.%, as indicated, for the preferred surface-concentration). For obvious reasons, this is a preferred mode for creating the two regions.

Workers will note that the composition of Region II can be varied in other ways to achieve these same results, or most of them. For instance, an aluminum addition can be substituted for (or added-to) the chromium enrichment, producing a ternary Co/Cr/Al alloy in Region II (one, or both of the Cr and Al concentrations can be increased across Region II, as workers will perceive). Such is indicated below in Ex. II.

Ex. II: Co/Cr/Al atop Co/Cr (otherwise, as Ex. I):

Ex. I is replicated and similarly tested except that the Co/Cr alloy of Region I is maintained at least part-way through Region II, but aluminum is co-sputtered along therewith in increasing concentration. Except as specified, all other parameters stay the same, such as thickness of Region II.

Now, in this (and most) example, one will prefer that the "ultimate" or exposed alloy atop Region II (along surface m-s) will be relatively completely non-reactive and non-corroding, as well as wear-resistant. Typically, this means that little or no magnetic material be present. Thus, here, the preferred Region II composition is 100% Al on top surface m-s, with decreasing % as one proceeds down toward Region I (e.g., ending with a few % Al immediately atop Region I).

The balance of Region II is preferably a Co/Cr alloy, preferably with the Co:Cr ratio kept constant. One might characterize such a Region II as an "increasingly-aluminided alloy" (cf. U.S. 4,048,390 to Dubin).

Now, various aluminum and aluminide protective coatings are known in the art of course. For instance, some are discussed in "The Super Alloys" (Chapter 12, edited by Sims, published 1972 by John Wylie & Sons)—for instance, on p. 346 it is stated: "A popular method to improve the oxidation resistance of nickel and cobalt super alloys is to diffuse aluminum into the surfaces—then upon oxidation exposure, a "tenacious aluminum oxide film forms on the surface of the aluminide and serves as the primary barrier against further reaction with environmental constituents". Such an oxide may, alternatively, be formed here.

This text also mentions concentration gradients, i.e., "as aluminum diffuses inward an overall aluminum concentration gradient can develop; similar gradings can develop in each phase present or forming, since most have ranges of permissble aluminum concentration".

The work also mentions various deposition processes for forming a protection system, such as by physical vapor deposition (e.g., of aluminide coatings). Workers will avert to various other deposition methods such as electrophoresis (plating particles or colloids, not ions) in aqueous or nonaqueous baths, especially with subsequent diffusion treatment, or such as chemical vapor deposition (e.g., depositing via exposure to an aluminum compound in the gaseous state).

—Results:

As with Ex. I, except that the upper regions of Region II are less magnetic, of course.

Alternatively, workers will understand that the Cr content may preferably be kept constant, or increased even (e.g., along with Al-content, or with the latter kept uniform) in certain instances. And, where a "more magnetic" Region II is required, one may of course decrease Al-content, as illustrated by related Ex. III below.

Ex. III (as II, but less % Al):

Ex. II is replicated and similarly tested; however, Al-content is decreased as compared to Ex. II; preferably from 0% to a few wt.% immediately atop Region I to a maximum of 5—10 wt.% atop Region II, with the balance comprising a Co/Cr alloy (preferably having constant ratio Co:Cr).

—Results:

As with Ex. II, except Region II is considerably more "magnetic".

Ex. IV (like III, but vary oxide %):

Ex. III is replicated and similarly tested; however, being made-up of an oxide of increasing wt.%. More particularly, Region II starts (atop Region I) as a particular ternary alloy (e.g., 95 wt.% Co/Cr; 5 wt.% Al) and is thereafter increasingly oxidized (e.g., concluding as 5 wt.% Co/Cr; 1 wt.% Al; balance oxide of Al, Cr or Co, or any combination—cf. reactive sputtering in $O_2$ preferable, when $O_2$ metered-in to increase %—less preferable is simple thermal oxidation, because of risk of warping disk and because control is less precise).

Ex. V: Co/Ni covered by Co-Ni-Cr: Fig. 5 (longitudinal recording):

Ex. I is, to some extent, followed here as a second preferred embodiment with a disk ($CD_2$ in Fig. 5) intended for longitudinal (horizontal) magnetic recording—however, here the underlayer $UL_2$ comprises chromium (alt. W); and the composite thickness $Cl_2$ is made up of Co-Ni, as the recording region (Region I), with the associated protective region (variable composition, Region II) adding (varied %) Cr—i.e., as Co-Ni-Cr applied and deposited in appropriate fashion as workers in the art understand.

Here, the disk substrate $S_2$ and other features and fabrication processes will be understood as the same as above, except where otherwise specified. Here, underlayer $UL_2$ is in the same thickness range as above and preferably is comprised of sputter-deposited chromium. The chemically-homogeneous recording thickness $CL_2$ (Region I) is composed of 80 wt.% Co/20 Ni and is 5—300 nm (pref. 100 nm) thick. It will exhibit magneto-crystalline anisotropy (easy axis) in the plane of the host surface of substrate $S_2$ and will have a suitable coercivity, (e.g., 797—2386 A/cm) as measured in this plane, as workers in the art will understand.

By contrast with Ex. I, the variable-composition protective thickness (Region II) here preferably comprises a ternary alloy: Cobalt-Nickel-Chromium, with increasing Cr concentration proceeding upward to the exposed surface m-s as before, preferably terminating with 100 wt.% Cr at m-s (and preferably starting with a few wt.% Cr atop Region I, with the balance Co-Ni, whose ratio of Co:Ni is preferably kept constant, e.g., 80 Co-20 Ni in Reg. II). This Region II is preferably the order of 10—100 nm thick, and is formed generally as described in Ex. I, preferably by co-sputtering chromium, along with Co-Ni.

Thus, where the overall magnetic layer $CL_1$ in Ex. I was the order of 110 to 1,300 nm thick; here, it will be much thinner, preferably about 60 to 400 nm, as workers in the art will understand. The function of the (Cr) underlayer $UL_2$ is to enhance magnetic recording as workers know. As before, workers will understand that, in certain cases, it will be possible to substitute a "Kapton" or like organic substrate for aluminum disk $S_2$.

—Results:

Results are generally as mentioned for Ex. I, except that longitudinal recording is involved here, with a much thinner recording layer (100 nm vs. 1,000 nm) and a somewhat thinner, more fragile protective layer (about 10—100 nm vs. 500 nm or more), and one more likely to be abraded-away, e.g., from head-landing, -takeoff.

Ex. VI: Co-Ni-Al atop Co-Ni (otherwise same as Ex. V):

Ex. V is replicated and similarly tested, except that, in the variable concentration-overcoat (Region II), aluminum is substituted for the chromium, being otherwise similarly applied and tested. Preferably, the Al wt.% follows the pattern of Ex. V (a few wt.% increasing to about 100 wt.%—as with the Cr).

—Results:

As in Ex. V, generally speaking.

—Variations on Examples (e.g., varying % oxide):

As workers will appreciate, the Region (II) of variable composition of the foregoing Examples may be modified along the lines suggested before—e.g., various forms of oxide (Cr-oxide and/or Al-oxide) added or substituted. Or, a quaternary composition may be used—e.g., adding Al to the Cr (or Cr to the Al) and varying one or both constituents up through the thickness of Region II.

And, of course, other Co-Ni proportions (or Co-Ni-alloys) are within contemplation—e.g., 55 Co-13.5 Ni-31.5 W.

Conceivably, one might use 100% Co in Region I—if so, Region II could be Co-Cr (add Cr, in increasing %).

Also, workers will visualize other "cobaltous" materials (e.g., Co-P, or Co-Ni-P as used for magnetic recording) that may be similarly protectively overcoated with a "graded" thickness (increasing concentration).

—Conclusion:

It will be understood that the preferred embodiments described herein are only exemplary, and that the thickness, composition, etc., of layers, in certain instances can be modified, as can the techniques of deposition and related fabrication steps, as workers will contemplate. Certain materials (e.g., anti-wear, non-corroding) and/or thicknesses (e.g., underlayer) may be modified, substituted or eliminated in certain instances.

Further, the expedients and methods here disclosed are also applicable for protecting other like subjects, especially where a somewhat magnetic over-coat is advantageous. Also, record films protected and modified as here taught are also applicable for other forms of recording and/or reproducing systems, such as those in which data is recorded and reproduced optically.

The above examples of possible variations of the present invention are merely illustrative. Accordingly, the present invention is to be considered as including all possible modifications and variations coming within the scope of the invention as defined by the appended claims.

**Claims**

1. A magnetic recording medium (CD') comprising a substrate (S'), and a single layer (CL), said layer (CL) comprising a first thickness (Region I) of cobaltous recording material and a second thickness (Region II) of a material having at least one magnetic constituent (M) and at least one non-magnetic anti-wear/non-corroding constituent (B), the concentration of said anti-wear/non-corroding constituent (B) in said second thickness (Region II) increasing continuously from said first thickness to the outer surface of the layer (CL).

2. A medium according to Claim 1, wherein the concentration of said non-magnetic constituent (B) increases to 100% at said outer surface.

3. A medium according to Claim 1 or Claim 2, wherein the recording material is cobalt or a cobalt alloy, and wherein said non-magnetic constituent (B) comprises Cr, Al, W, Mo, $MoS_2$, or oxides thereof.

4. A medium according to Claim 3, wherein the recording material comprises Cobalt, alone or alloyed with Cr or Ni, and wherein the magnetic constituent (M) in said second thickness comprises Cobalt or Cobalt-Nickel.

5. A medium according to Claim 4, wherein the recording material comprises Co-Ni; the magnetic constituent (M) comprises Co, Ni or Co-Ni, and the non-magnetic constituent (B) comprises Cr.

6. A medium according to Claim 5, wherein the recording material comprises 75—85% Co and the balance Ni.

7. A medium according to Claim 3, wherein the non-magnetic constituent (B) comprises one or more oxides of Cr.

8. A medium according to Claim 5, wherein the recording material consists of 85% Co and 15% Ni.

9. A medium according to Claim 3, wherein the recording material comprises 80% Co and 20% Ni; the magnetic constituent is Co, Ni or Co-Ni and the non-magnetic constituent comprises Cr.

10. A medium according to Claim 3, wherein the recording material comprises 80% Co and 20% Ni; the magnetic constituent is Co, Ni or Co-Ni and the non-magnetic constituent comprises Al.

11. A medium according to Claim 10, wherein the non-magnetic constituent comprises Al plus one or more oxides of Al.

12. A medium according to Claim 3, wherein the recording material comprises Co-Cr and the magnetic constituent comprises Co.

13. A medium according to Claim 12, wherein the recording material comprises 80—85% Co and the balance Cr.

14. A medium according to Claim 13, wherein the non-magnetic material comprises Cr and one or more oxides of Cr.

15. A medium according to Claim 14, wherein the recording material comprises 85% Co and 15% Cr.

16. A medium according to Claim 3, wherein the recording material comprises Cobalt alone and the magnetic constituent comprises Co.

17. A medium according to Claim 3, wherein the non-magnetic constituent comprises Cr and/or one or more oxides thereof.

18. A medium according to any of the preceding Claims, wherein at least one of the magnetic constituents (M) is the same as one of the constituents of the recording material.

19. A method of producing a magnetic recording medium (CD') comprising a substrate (S'), and a single layer (CL), said layer (CL) comprising a first thickness (Region I) of cobaltous recording material and a second thickness (Region II) of a material having at least one magnetic constituent (M) and at least one non-magnetic anti-wear/non-corroding constituent (B), the concentration of said anti-wear/non-corroding constituent (B) in said second thickness (Region II) increasing continuously from said first thickness to the outer surface of the layer (CL), wherein the first thickness is the product of reactive sputtering and the second thickness is principally the product of continuing this sputtering with $O_2$ admitted in increasing concentration as the layer is built-up.

20. A method of producing a magnetic recording medium (CD′) comprising a substrate (S′), and a single layer (CL), said layer (CL) comprising a first thickness (Region I) of cobaltous recording material and a second thickness (Region II) of a material having at least one magnetic constituent (M) and at least one non-magnetic anti-wear/non-corroding constituent (B), wherein the concentration of said anti-waer/non-corroding constituent (B) in said second thickness (Region II) increases continuously from said first thickness to the outer surface of the layer (CL), and wherein the first thickness is the product of a prescribed deposition process, and this process is extended, with increasing concentration of non-magnetic material added, to form the second thickness.

21. A medium according to any of Claims 1 to 18, wherein the substrate is a disk.

22. A medium according to any of Claims 1 to 18, wherein the substrate is a tape.

23. A medium according to Claim 21, including a magnetic underlayer (UL′) between the disk and the first thickness (Region I).

**Patentansprüche**

1. Magnetisches Aufzeichnungsmedium (CD′) mit einem Substrat (S′) und einer einzigen Schicht (CL), die eine erste Stärke (Bereich I) aus kobalthaltigem Anfzeichnungsmaterial und eine zweite Stärke (Bereich II) aus einem Material enthält, das aus mindestens einem magnetischen Bestandteil (M) und mindestens einem nicht-magnetischen, abriebverhindernden/nicht-korrodierenden Bestandteil (B) besteht, wobei die Konzentration des abriebverhindernden/nicht-korrodierenden Bestandteils (B) in der zweiten Stärker (Bereich II) von der ersten Stärke zu der Außenfläche der Schicht (CL) kontinuierlich zunimmt.

2. Aufzeichnungsmedium nach Anspruch 1, dadurch gekennzeichnet, daß die Konzentration des nichtmagnetischen Bestandteils (B) auf 100% in der Außenfläche zunimmt.

3. Aufzeichnungsmedium nach Anspruch 1 oder 2, dadurch gekennzeichnet, daß das Aufzeichnungsmaterial Kobalt oder eine Kobaltlegierung enthält und daß der nicht-magnetische Bestandteil (B) Cr, Al, W, Mo, $MoS_2$ oder deren Oxyde enthält.

4. Aufzeichnungsmedium nach Anspruch 3, dadurch gekennzeichnet, daß das Aufzeichnungsmaterial Kobalt allein oder eine Legierung mit Cr oder Ni enthält, und daß der magnetische Bestandteil in der zweiten Stärke Kobalt oder Kobalt-Nickel enthält.

5. Aufzeichnungsmedium nach Anspruch 4, dadurch gekennzeichnet, daß das Aufzeichnungsmaterial Co-Ni; der magnetische Bestandteil (M) Co, Ni oder Co-Ni; und der nicht-magnetische Bestandteil (B) Cr enthält.

6. Aufzeichnungsmedium nach Anspruch 5, dadurch gekennzeichnet, daß das Aufzeichnungsmaterial 75 bis 85% Co und für den Rest Ni enthält.

7. Aufzeichnungsmedium nach Anspruch 3, dadurch gekennzeichnet, daß der nicht-magnetische Bestandteil (B) eines oder mehrere Oxyde von Cr enthält.

8. Aufzeichnungsmedium nach Anspruch 5, dadurch gekennzeichnet, daß das Aufzeichnungsmaterial aus 85% Co und 15% Ni besteht.

9. Aufzeichnungsmedium nach Anspruch 3, dadurch gekennzeichnet, daß das Aufzeichnungsmaterial 80% Co und 20% Ni enthält; daß der magnetische Bestandteil Co, Ni oder Co-Ni ist; und der nicht-magnetische Bestandteil Cr enthält.

10. Aufzeichnungsmedium nach Anspruch 3, dadurch gekennzeichnet, daß das Aufzeichnungsmaterial 80% Co und 20% Ni enthält; daß der magnetische Bestandteil Co, Ni oder Co-Ni ist; und daß der nicht-magnetische Bestandteil Al enthält.

11. Aufzeichnungsmedium nach Anspruch 10, dadurch gekennzeichnet, daß der nicht-magnetische Bestandteil Al und eines oder mehrere Oxyde von Al enthält.

12. Aufzeichnungsmedium nach Anspruch 3, dadurch gekennzeichnet, daß das Aufzeichnungsmaterial Co-Cr und der magnetische Bestandteil Co enthält.

13. Aufzeichnungsmedium nach Anspruch 12, dadurch gekennzeichnet, daß das Aufzeichnnungsmaterial 80 bis 85% Co und für den Rest Cr enthält.

14. Aufzeichnungsmedium nach Anspruch 13, dadurch gekennzeichnet, daß das nicht-magnetische Material Cr und eines oder mehrere Oxyde von Cr enthält.

15. Aufzeichnungsmedium nach Anspruch 14, dadurch gekennzeichnet, daß das Aufzeichnungsmaterial 85% Co und 15% Cr enthält.

16. Aufzeichnungsmedium nach Anspruch 3, dadurch gekennzeichnet, daß das Aufzeichnungsmaterial Kobalt allein und der magnetische Bestandteil Co enthält.

17. Aufzeichnungsmedium nach Anspruch 3, dadurch gekennzeichnet, daß der nicht-magnetische Bestandteil Cr und/oder eines oder mehrere Oxyde davon enthält.

18. Aufzeichnungsmedium nach einem oder mehreren der vorstehenden Ansprüche, dadurch gekennzeichnet, daß mindestens einer der magnetischen Bestandteile (M) der gleiche ist wie die Bestandteile des Aufzeichnungsmaterials.

19. Verfahren zur Herstellung eines magnetischen Aufzeichnungsmediums (CD′) mit einem Substrat (S′) und einer einzigen Schicht (CL), die eine erste Stärke (Bereich I) aus kobalthaltigem Aufzeichnungsmaterial und eine zweite Stärke (Bereich II) aus einem Material enthält, das aus mindestens einem magnetischen Bestandteil (M) und mindestens einem nicht-magnetischen, abriebverhindernden/ nich-korrodierenden Bestandteil (B) besteht, wobei die Konzentration des abriebverhindernden/nicht-korrodierenden Bestandteils (B) in der zweiten Stärke (Bereich II) von der ersten Stärke zu der Außenfläche der Schicht (CL) kontinuierlich zunimmt, dadurch gekennzeichnet, daß die erste Stärke das Produkt eines reaktiven Sputtervorganges ist und die zweite Stärke prinzipiell das Produkt einer Weiterführung dieses Sputtervorganges ist, wobei $O_2$ in zunehmender Konzentration bei der Bildung der Schicht zugelassen wird.

20. Verfahren zur Herstellung eines magnetischen Aufzeichnungsmediums (CD') mit einem Substrat (S') und einer einzigen Schicht (CL), die eine erste Stärke (Bereich I) aus kobalthaltigem Aufzeichnungsmaterial und eine zweite Stärke (Bereich II) aus einem Material enthält, das aus mindestens einem magnetischen Bestandteil (M) und mindestens einem nicht-magnetischen, abriebverhindernden/ nicht-korrodierenden Bestandteil (B) besteht, wobei die Konzentration des abriebsverhindernden/nicht-korrodierenden Bestandteils (B) in der zweiten Stärke (Bereich II) von der ersten Stärke zu der Außenfläche der Schicht (CL) kontinuierlich zunimmt, dadurch gekennzeichnet, daß die erste Stärke das Produkt eines vorgeschriebenen Auftragprozesses ist und daß dieser Prozess mit zunehmender Konzentration von hinzugefügtem nicht-magnetischen Bestandteil fortgesetzt wird, um die zweite Stärke zu bilden.

21. Aufzeichnungsmedium nach einem oder mehreren der Ansprüche 1 bis 18, dadurch gekennzeichnet, daß das Substrat eine Scheibe ist.

22. Aufzeichnungsmedium nach einem oder mehreren der Ansprüche 1 bis 18, dadurch gekennzeichnet, daß das Substrat ein Band ist.

23. Aufzeichnungsmedium nach Anspruch 21, gekennzeichnet durch eine magnetische Zwischenschicht (UL') zwischen der Scheibe und der ersten Stärke (Region I).

## Revendications

1. Un milieu d'enregistrement magnétique (CD') comprenant un substrat (S') et une couche unique (CL), ladite couche (CL) comprenant une première épaisseur (région I) de matériau d'enregistrement au cobalt et une seconde épaisseur (région II) d'un matériau ayant au moins un constituant magnétique (M) et au moins un constituant non-magnétique anti-usure/non corrodable (B), la concentration dudit constituant (B) anti-usure/non corrodable dans ladite seconde épaisseur (région II) augmentant d'une manière continue à partir de ladite première épaisseur jusqu'à la surface extérieure de la couche (CL).

2. Un milieu selon la revendication 1 dans lequel la concentration dudit constituant non magnétique (B) augmente jusqu'à 100% à ladite surface extérieure.

3. Un milieu selon la revendication 1 ou la revendication 2 dans lequel le matériau d'enregistrement est du cobalt ou un alliage de cobalt et dans lequel ledit constituant non magnétique (B) comprend du Cr, Al, W, Mo, $MoS_2$ ou des oxydes de ceux-ci.

4. Un milieu selon la revendication 3 dans lequel le matériau d'enregistrement comprend du cobalt seul ou allié avec du CR ou du Ni et dans lequel le constituant magnétique (M) dans ladite seconde épaisseur comprend du cobalt ou du cobalt-nickel.

5. Un milieu selon la revendication 4 dans lequel le matériau d'enregistrement comprend du Co-Ni; et le constituant magnétique (M) comprend du cobalt, du nickel ou Co-Ni et le constituant non magnétique (B) comprend du chrome.

6. Un milieu selon la revendication 5 dans lequel le matériau d'enregistrement comprend de 75 à 85% de cobalt et le restant du nickel.

7. Un milieu selon la revendication 3 dans lequel le constituant non-magnétique (B) comprend un ou plusieurs oxydes de chrome.

8. Un milieu selon la revendication 5 dans lequel le matériau d'enregistrement consiste en 85% de cobalt et en 15% de nickel.

9. Un milieu selon la revendication 3 dans lequel le matériau d'enregistrement comprend 80% de cobalt et 20% de nickel, le constituant magnétique est du cobalt, du nickel ou Co-Ni et le constituant non magnétique comprend du chrome.

10. Un milieu selon la revendication 3 dans lequel le matériau d'enregistrement contient 80% de cobalt et 20% de nickel; le constituant magnétique est du cobalt, du nickel, ou du Co/Ni et le constituant non magnétique contient de l'aluminium.

11. Un milieu selon la revendication 10 dans lequel le constituant non-magnétique contient de l'aluminium plus un ou plusieurs oxydes d'aluminium.

12. Un milieu selon la revendication 3 dans lequel le matériau d'enregistrement contient du Co/Cr et le constituant magnétique contient du Co.

13. Un milieu selon la revendication 12 dans lequel le matériau d'enregistrement contient de 80 à 85% de cobalt et le solde est du chrome.

14. Un milieu selon la revendication 13 dans lequel le matériau non-magnétique contient du Cr et un ou plusieurs oxydes de Cr.

15. Un milieu selon la revendication 14 dans lequel le matériau d'enregistrement contient 85% de Co et 15% de Cr.

16. Un milieu selon la revendication 3 dans lequel le matériau d'enregistrement contient du cobalt seul et le constituant magnétique contient du cobalt.

17. Un milieu selon la revendication 3 dans lequel le constituant non magnétique contient du Cr et/ou un ou plusieurs oxydes de celui-ci.

18. Un milieu selon l'une des revendications précédentes dans lequel au moins un des constituants magnétiques (M) est le même qu'un des constituants du matériau d'enregistrement.

19. Un procédé pour produire un milieu d'enregistrement magnétique (CD') qui contient un substrat (S') et une couche unique (CL), ladite couche (CL) comprenant une première épaisseur (région I) d'un matériau d'enregistrement au cobalt et une seconde épaisseur (région II) d'un matériau ayant au moins un constituant magnétique (M) et au moins un constituant non-magnétique, anti-usure/non corrodable (B), la concentration dudit constituant (B) anti-usure et non corrodable, dans ladite seconde épaisseur (région II) augmentant d'une manière continue de ladite première épaisseur à la surface extérieure de la couche (CL) dans laquelle la première épaisseur est le produit d'un crépitement réactif et la seconde épaisseur est principalement le produit de la continuation de ce crépitement avec de l'oxygène admis à des concentrations croissantes à mesure que la couche est construite.

20. Un procédé pour produire un milieu d'enregistrement magnétique (CD') qui comprend un substrat (S') et une couche unique (CL), ladite couche comprenant une première épaisseur (couche I) d'un matériau d'enregistrement au cobalt et une seconde épaisseur (région II) d'un matériau ayant au moins un constituant magnétique (M) et au moins un constituant non-magnétique, anti-usure/et non corrodable (B) dans laquelle la concentration dudit constituant anti-usure/non corrodable (B) dans ladite seconde épaisseur (région II) augmente d'une manière continue de ladite première épaisseur à la surface extérieure de la couche (CL) et dans laquelle la première épaisseur est le produit du procédé de dépôt prescrit et ce procédé est étendu avec une concentration croissante en matériau non magnétique ajouté, pour former la seconde épaisseur.

21. Un milieu selon l'une des revendications 1 à 18 dans laquelle le substrat est un disque.

22. Un milieu selon l'une des revendications 1 à 18 dans laquelle le substrat est un ruban.

23. Un milieu selon la revendication 21 comprenant une sous-couche (UL') magnétique entre le disque et la première épaisseur (région I).

FIG.1.

FIG.2.

FIG.3.

FIG.4.

FIG.5.

FIG.6.

FIG.7.